# EUROPÄISCHE PATENTSCHRIFT

(11) **EP 3 518 058 B1**
(45) Veröffentlichungstag und Bekanntmachung des Hinweises auf die Patenterteilung: **03.03.2021**
(21) Anmeldenummer: 18153727.5
(22) Anmeldetag: 26.01.2018
(51) Int. Cl.: B23F 23/12, G05B 19/19

(54) **VERFAHREN ZUR AUTOMATISIERTEN POSITIONIERUNG EINES VERZAHNTEN WERKSTÜCKS UND FERTIGUNGSSYSTEM ZUR DURCHFÜHRUNG DES VERFAHRENS**
METHOD FOR AUTOMATED POSITIONING OF A TOOTHED WORKPIECE AND PRODUCTION SYSTEM FOR CARRYING OUT THE METHOD
PROCÉDÉ DE POSITIONNEMENT AUTOMATISÉ D'UNE PIÈCE À USINER DENTÉE ET SYSTÈME DE FABRICATION DESTINÉ À LA MISE EN UVRE DUDIT PROCÉDÉ

(43) Veröffentlichungstag der Anmeldung: 31.07.2019
(73) Patentinhaber: Klingelnberg GmbH, 42499 Hückeswagen (DE)
(72) Erfinder: Predki, Thomas, 48455 Bad Bentheim (DE)
(74) Vertreter: Janke Scholl Patentanwälte PartG mbB

(56) Entgegenhaltungen:
- WO-A1-2017/074560
- CH-A5- 682 853
- DE-A1-102007 043 497
- US-A1- 2001 056 313
- US-A1- 2015 197 009

## Beschreibung

### Gebiet der Erfindung

Gegenstand der Erfindung sind ein Verfahren zur automatisierten Positionierung eines verzahnten Werkstücks sowie ein Fertigungssystem zur Durchführung eines solchen Verfahrens.

### Hintergrund der Erfindung, Stand der Technik

In der industriellen Fertigung werden Werkstücke mit Strichcodes, QR-Codes oder RFID-Tags versehen, um jedes einzelne Werkstück eindeutig zu identifizieren und entlang der Wertschöpfungskette zu verfolgen. Hierbei können einem Werkstück werkstückspezifische Daten zugeordnet werden, die während Bearbeitungs- oder Messschritten erfasst worden sind.

In der Serienfertigung von verzahnten Werkstücken werden werkstückspezifische Daten beispielsweise dazu verwendet, die Prozessparameter von Verzahnmaschinen zu korrigieren. So werden in regelmäßigen Abständen einzelne Werkstücke vermessen, um sicherzustellen, dass die geforderte Fertigungsgenauigkeit eingehalten wird. Sofern ein Korrekturbedarf vorliegt, werden anhand der Messdaten Korrekturwerte ermittelt, die manuell an der Maschine selbst oder über ein Netzwerk an die Maschinensteuerung übergeben werden.

Das Dokument CH 682853 A5 beschreibt ein Verfahren zum automatischen Positionieren einer Zahnlücke eines Zahnrades bei einer NC-gesteuerten Zahnflnakenbearbeitungsmaschine über eine Messkugel. Das Dokument DE 10 2007 043 497 A1 offenbart ein Verfahren zum Ausrichten eines Roboters über eine Markierung, wobei die Markierung selbst das Mass zur Ausrichtung wiederspiegelt.

Vor dem Hintergrund des Stands der Technik besteht die technische Problemstellung, die geforderte Fertigungsgenauigkeit bei der Herstellung verzahnter Werkstücke möglichst effizient zu erreichen.

Die voranstehende beschriebene, technische Problemstellung wird jeweils gelöst durch ein Verfahren nach Anspruch 1 und ein Fertigungssystem nach Anspruch 12. Weitere Ausgestaltungen der Erfindung ergeben sich aus den abhängigen Ansprüchen und der nachstehenden Beschreibung.

Gemäß einem ersten Aspekt betrifft die Erfindung ein Verfahren zur automatisierten Positionierung eines verzahnten Werkstücks, mit den Verfahrensschritten: Bereitstellen eines verzahnten Werkstücks, das eine maschinenlesbare, werkstückspezifische Markierung aufweist, wie einen QR-Code, einen Barcode, ein RFID-Tag oder dergleichen; Anbringen des verzahnten Werkstücks an einer Spindel einer CNC-gesteuerten Mehrachsmaschine; Automatisiertes Erfassen der Markierung des Werkstücks; Ermitteln einer Ist-Position des Werkstücks relativ zu der Mehrachsmaschine anhand der Markierung; Überführen des Werkstücks aus der Ist-Position in eine Soll-Position relativ zu der Mehrachsmaschine, bevor ein Bearbeitungs- und/oder Messverfahren in der Mehrachsmaschine durchgeführt wird.

Die werkstückspezifische Markierung dient daher sowohl zur Identifizierung des Werkstücks als auch zur Positionierung des Werkstücks. Soweit beispielsweise ein QR-Code an dem verzahnten Werkstück vorgesehen ist, ist die Position des QR-Codes an dem Werkstück daher eine geometrische Referenzmarke zur Positionierung des Werkstücks innerhalb der Maschine.

Eine geometrische Referenzierung mithilfe der werkstückspezifischen Markierung ermöglicht insbesondere eine werkstückspezifische Zuordnung und Verwendung von Echtzeitprozessdaten für laufende und/oder nachfolgende Fertigungsschritte.

Das automatisierte Erfassen der Markierung umfasst mindestens das Bestimmen der Position der Markierung relativ zur CNC-gesteuerten und auch das Lesen einer codierten Information zur Werkstückidentifikation.

Bei der codierten Information der Markierung kann es sich um eine eineindeutige Markierung im Sinne eines Unique Identifiers (UID) handeln.

Bei dem verzahnten Werkstück kann es sich beispielsweise um ein Stirnrad oder ein Kegelrad handeln.

Bevorzugt ist die Markierung derart robust ausgeführt, dass sie einer Wärmebehandlung des Werkstücks zuverlässig standhält, wobei die Markierung insbesondere durch eine Deformation und/oder einen Materialabtrag im Bereich einer Werkstückoberfläche gebildet sein kann. So kann die Markierung z.B. als Nadelprägung an dem Werkstück hergestellt sein. Weiter kann die Markierung durch Lasermarkieren gebildet sein. Demnach bleiben ein Barcode oder QR-Code über die gesamte Fertigungskette hinweg intakt. Gegebenenfalls kann die Markierung selbst nach mehrjähriger Verwendung des fertiggestellten Werkstücks, z.B. in einem Fahrzeuggetriebe, noch lesbar sein.

Es kann vorgesehen sein, dass das Bereitstellen des verzahnten Werkstücks lediglich das Zuführen des bereits mit einer Markierung versehenen Werkstücks zu der CNC-gesteuerten Mehrachsmaschine bedeutet, wobei das Zuführen manuell oder automatisiert erfolgen kann.

Alternativ oder ergänzend ist eine weitere Ausgestaltung des Verfahrens gekennzeichnet durch das Bereitstellen des verzahnten Werkstücks, mit den Verfahrensschritten: Vorsehen der maschinenlesbaren, werkstückspezifischen Markierung an dem Werkstück; Fertigung einer Referenzgeometrie, wie einer Zahnlücke, einer Zahnflanke oder dergleichen, durch Verzahnen eines Werkstückrohlings; Bestimmen eines Abstands zwischen der Markierung und der Referenzgeometrie des verzahnten Werkstücks; und Speichern des Abstands in einem werkstückspezifischen Datensatz einer Datenbank; wobei der Abstand bezogen auf ein Maschinenkoordinatensystem der Mehrachsmaschine vektoriell erfasst und in dem Datensatz gespeichert wird.

Die Erfindung umfasst das Bereitstellen des verzahnten Werkstücks die geometrische Referenzierung des verzahnten Werkstücks, in dem die Markierung an dem Werkstück angebracht wird und der Abstand dieser Markierung zu einer Referenzgeometrie in der Datenbank gespeichert wird. In nachfolgenden Fertigungsschritten oder Messschritten kann auf diese geometrische Referenz zurückgegriffen werden, um ein automatisiertes Ausrichten bzw. Positionieren des Werkstücks zu ermöglichen.

Demnach kann das Bereitstellen und geometrische Referenzieren des verzahnten Werkstücks z.B. mittels einer ersten CNC-gesteuerten Mehrachsmaschine erfolgen, die eine Verzahnungsmaschine oder dergleichen ist.

Nachfolgend kann das Anbringen des Werkstücks an einer Spindel, das automatisierte Erfassen der Markierung, das Ermitteln einer Ist-Position des Werkstücks und das Überführen aus der Ist-Position in die Soll-Position auf einer zweiten CNC-gesteuerten Mehrachsmaschine erfolgen, die eine Verzahnungsmessmaschine oder eine Feinbearbeitungsmaschine ist.

Somit kann das Bereitstellen des verzahnten Werkstücks insbesondere das Vorverzahnen und das Hinterlegen der geometrischen Referenzierung in einer Datenbank umfassen, auf die in darauffolgenden Fertigungsschritten oder Messschritten zurückgegriffen werden kann.

Das Fertigen der Referenzgeometrie kann grundsätzlich vor oder nach dem Vorsehen der maschinenlesbaren, werkstückspezifischen Markierung an dem Werkstück erfolgen. Bevorzugt erfolgt das Vorsehen der maschinenlesbaren, werkstückspezifischen Markierung an dem Werkstück vor der Fertigung der Referenzgeometrie. So kann zunächst die Markierung an dem Werkstück bzw. einem unverzahnten Rohling (z.B. nach einer Drehbearbeitung) angebracht und in einem darauffolgenden Verfahrensschritt eine Verzahnung hergestellt werden.

Anschließend können der Abstand zwischen der Markierung und beispielsweise der ersten erzeugten Zahnlücke gemessen und gespeichert werden. Alternativ kann die Position einer Zahnlücke, insbesondere der ersten Zahnlücke, relativ zur Markierung bereits vor dem Fertigen der Zahnlücke durch die in der Maschinensteuerung hinterlegte Prozesskinematik vorgegeben sein, so dass auf ein zusätzliches Messen des Abstands verzichtet werden kann. Dies ist insbesondere für den Fall vorteilhaft, dass das Herstellen der Markierung und das (Vor-)Verzahnen des Werkstücks auf einer Aufspannung in einer CNC-gesteuerten Mehrachsmaschine erfolgen.

Es kann vorgesehen sein, dass die Markierung an einem unverzahnten Werkstück, also einem Rohling, bereits vor dem Zuführen des Werkstücks auf einer Verzahnmaschine erfolgt. Sobald dieser markierte Rohling innerhalb einer Verzahnmaschine aufgenommen ist, kann mithilfe der Markierung und der Datenbank überprüft werden, ob die korrekte Maschinenkinematik für den betreffenden Rohling in der Maschinensteuerung geladen ist bzw. anhand der Markierung und der Datenbank eine Prozesskinematik geladen und der Rohling zum Herstellen der ersten Zahnlücke positionieren werden.

Alternativ kann in einem ersten Schritt ein Verzahnen des Werkstücks bzw. eines unverzahnten Rohlings erfolgen, wobei nach dem Verzahnen die Markierung erzeugt oder angebracht wird.

Insbesondere kann die Markierung in diesem Fall derart hergestellt werden, dass die Markierung entlang einer radialen Richtung betrachtet mit einer Zahnlücke fluchtend angeordnet ist, wobei es sich insbesondere um die erste an dem Werkstück erzeugte Zahnlücke handeln kann.

Sofern die Vorgabe besteht, dass die Markierung grundsätzlich auf die erste Zahnlücke weisend und mit der ersten Zahnlücke fluchtend appliziert wird, kann auf eine werkstückindividuelle Erfassung eines Abstands der Markierung zur ersten Lücke verzichtet werden.

Das Anbringen des verzahnten Werkstücks an der Spindel kann durch manuelles Einlegen des Werkstücks in eine CNC-gesteuerte Mehrachsmaschine erfolgen. So kann das verzahnte Werkstück, das die maschinenlesbare, werkstückspezifische Markierung aufweist, beispielsweise manuell auf eine Spindel einer Verzahnungsmessmaschine aufgesetzt werden. Nachdem das verzahnte Werkstück auf der Spindel aufgenommen ist, erfasst die Verzahnungsmessmaschine die Position der werkstückspezifischen Markierung sowie die beispielsweise als QR-Code ausgebildete, codierte Informationen. Anhand der werkstückspezifischen Markierung, die als geometrische Referenz dient, kann das verzahnte Werkstück aus der Ist-Position in die Soll-Position überführt werden, um z.B. ein kollisionsfreies Einfädeln eines Messtasters in eine bestimmte Zahnlücke zu ermöglichen.

Alternativ kann das Anbringen des verzahnten Werkstücks ein automatisiertes Bestücken der Spindel der CNC-gesteuerten Mehrachsmaschine umfassen, wobei das verzahnte Werkstück beispielsweise mithilfe einer Handhabungseinrichtung, wie einem Roboter oder dergleichen, auf die Spindel aufgesetzt wird. So kann das verzahnte Werkstück beispielsweise automatisiert einer Hartfeinbearbeitungsmaschine zugeführt und auf die Spindel der Hartfeinbearbeitungsmaschine aufgesetzt werden. Anschließend erfasst die Hartfeinbearbeitungsmaschine die Position der werkstückspezifischen Markierung sowie die beispielsweise als Barcode ausgebildete, codierte Informationen. Anhand der werkstückspezifischen Markierung, die als geometrische Referenz dient, kann das verzahnte Werkstück aus der Ist-Position in die Soll-Position überführt werden, um z.B. ein kollisionsfreies Einführen eines Schleif- oder Honwerkzeugs in eine Zahnlücke zu ermöglichen.

Das Vorsehen der maschinenlesbaren, werkstückspezifischen Markierung kann mithilfe eines Lasers oder durch Nadelprägung erfolgen. Dies hat den Vorteil, dass die Markierung dauerhaft und nicht lösbar in den Werkstoff des Werkstücks eingearbeitet wird.

Alternativ kann die maschinenlesbare, werkstückspezifische Markierung auf das Werkstück aufgeklebt oder aufgedruckt werden. Damit kann eine kostengünstige Markierung erreicht werden, die gegebenenfalls wieder von dem Werkstück ablösbar ist.

Alternativ kann die maschinenlesbare, werkstückspezifische Markierung durch Ätzen an dem Werkstück angebracht werden.

Nach einer Weiterbildung des voranstehend beschriebenen Verfahrens kann die Referenzgeometrie die erste an dem Werkstückrohling gebildete Zahnlücke sein. Somit kann die Markierung zur geometrischen Referenzierung der ersten an dem Werkstück gebildeten Zahnlücke dienen, wobei diese erste Zahnlücke in nachfolgenden Fertigungsschritten oder Messschritten anhand der geometrischen Referenzierung automatisiert identifiziert und angefahren werden kann.

Diese Vorteile gelten gleichermaßen für die Alternative, dass die Referenzgeometrie eine Zahnflanke ist, die die erste an dem Werkstückrohling gebildete Zahnlücke begrenzt. Dabei kann es sich beispielsweise um die in einer Draufsicht auf die Markierung betrachtet rechte Zahnflanke der ersten Zahnlücke handeln.

Nach einer weiteren Ausgestaltung des Verfahrens erfolgt das Bestimmen des Abstands beim Bereitstellen des verzahnten Werkstücks mit den Verfahrensschritten: Erfassen der Position der maschinenlesbaren, werkstückspezifischen Markierung innerhalb eines Maschinenkoordinatensystems der CNC-gesteuerten Mehrachsmaschine; Erfassen der Position der Referenzgeometrie innerhalb des Maschinenkoordinatensystems der CNC-gesteuerten Mehrachsmaschine; und Berechnung der Differenz zwischen der Position der Referenzgeometrie und der Position der Markierung.

Der Abstand ist ein relativ zu einer zentralen Mittelachse der Spindel und des Werkstücks gemessener radialer Abstand und/oder Winkelabstand.

Eine weitere Ausgestaltung des Verfahrens ist gekennzeichnet durch das Ermitteln einer Ist-Position des Werkstücks relativ zu der Mehrachsmaschine anhand der Markierung, mit den Verfahrensschritten: Lesen der Markierung mit einer Leseeinrichtung der CNC-gesteuerten Mehrachsmaschine und Laden des werkstückspezifischen Datensatzes aus der Datenbank in die Steuerung der CNC-gesteuerten Mehrachsmaschine; Messen der Position der Markierung innerhalb des Maschinenkoordinatensystems der CNC-gesteuerten Mehrachsmaschine mithilfe einer Messeinrichtung der CNC-gesteuerten Mehrachsmaschine; Berechnung der Position der Referenzgeometrie innerhalb des Maschinenkoordinatensystems der CNC-gesteuerten Mehrachsmaschine aus der gemessenen Position der Markierung und dem in dem Datensatz hinterlegten Abstand zwischen der Markierung und der Referenzgeometrie.

Sobald die Markierung erfasst ist, kann demnach auf die Position der Referenzgeometrie geschlossen und das Werkstück in seine Sollposition überführt werden. Dadurch, dass die geometrische Referenzierung für jedes Werkstück individuell in einer Datenbank hinterlegt sein kann, kann das Überführen eines Werkstücks aus seiner Ist-Position in die Soll-Position werkstückspezifisch erfolgen. Es ist daher nicht erforderlich, dass für jedes Werkstück die Markierung beispielsweise unter einem fest vorgegebenen radialen Abstand und einem fest vorgegebenen Winkelabstand zur Referenzgeometrie erfolgen muss, da für jedes Werkstück der individuelle Abstand der Markierung zu einer Referenzgeometrie in der Datenbank hinterlegt werden kann. So kann beispielsweise ein erstes Werkstück eine Markierung haben, die einen Winkelabstand von 30° zu einer ersten Zahnlücke der Verzahnung des Werkstücks aufweist, während ein zweites Werkstück eine Markierung aufweist, die unter einem Winkelabstand von 60° zu der ersten Zahnlücke dieses zweiten Werkstücks versetzt angeordnet ist.

Es kann vorgesehen sein, dass nach dem Überführen des Werkstücks aus der Ist-Position in die Soll-Position ein Antasten und/oder Einfädeln eines Messtasters oder eines Bearbeitungswerkzeugs erfolgt, wobei insbesondere ein Antasten der die erste Zahnlücke begrenzenden Zahnflanke und/oder ein Einfädeln eines Messtasters oder eines Bearbeitungswerkzeugs in die erste Zahnlücke erfolgen.

Soweit ein verzahntes Werkstück im Rahmen bekannter Fertigungsverfahren nach einem Härten hartfeinbearbeitet werden soll, kann vorgesehen sein, dass zum sogenannten Einfädeln, Einmitten bzw. Einlücken eines Werkzeugs z.B. die Zahnflanken dreier Zahnlücken zunächst mit einem Messtaster angetastet werden, um den Einfluss von Härteverzügen zu erfassen. Anschließend kann die gemessene Teilung über die drei erfassten Lücken gemittelt werden. Beim Finden einer ersten Lücke durch den Messtaster besteht dabei die Herausforderung, dass auch der Zahnkopf durch den empfindlichen Messtaster getroffen werden kann. Daher werden das Werkstück und der Messtaster langsam angenähert und der Messtaster bei einer Berührung im Bereich des Kopfkegels zurückgezogen. Anschließend wird das Werkstück um eine halbe Teilung verdreht und erneut zugestellt. Das Auffahren auf den Zahnkopf kann trotz größter programmtechnischer Vorsicht zu Verformungen des Messtasters führen.

Erfindungsgemäß kann nunmehr ein Einmitten bzw. Einfädeln eines Werkzeugs in eine Zahnlücke gänzlich ohne vorheriges Antasten erfolgen, da die Position der ersten Zahnlücke durch die geometrische Referenzierung hinreichend genau bekannt ist. Dies ist insbesondere bei geringen zu erwartenden Härteverzügen möglich. Es kann daher wesentlich zügiger mit der tatsächlichen Hartfeinbearbeitung begonnen werden.

Soweit größere Härteverzüge zu erwarten sind, kann vorgesehen sein, dass vor dem Einführen des Werkzeugs in eine Zahnlücke zwar ein Antasten der Lücke durch einen Messtaster erfolgt, dieses Antasten durch den Messtaster jedoch wesentlich zügiger erfolgt, da die Position der ersten Zahnlücke durch die geometrische Referenzierung hinreichend genau bekannt ist, und der Messtaster ohne die Gefahr einer Kollision im Zahnkopfbereich mit großem Vorschub in die Lücke zugestellt werden kann. Auch hier besteht der Vorteil einer verkürzten Prozesszeit im Vergleich zu bekannten Verfahren, wobei zudem ein Beschädigen des Messtasters zuverlässig vermieden werden kann. Neben einer Zahnlücke oder einer Zahnflanke können alternativ oder ergänzend ein Zahnfuß oder ein Zahnkopf zur geometrischen Referenzierung des Werkstücks im Zusammenhang mit der Markierung dienen.

Demnach kann das Positionieren des Werkstücks anhand der Markierung lediglich eine erste, vergleichsweise grobe Ausrichtung des Werkstücks sein, mit einer Genauigkeit im Bereich von +/- 0,2 mm. Anschließend kann ein Antasten und Einfädeln, beispielsweise eines Messtasters, in bekannter Weise erfolgen.

Es kann vorgesehen sein, dass das automatisierte Erfassen der Markierung und/oder das Ermitteln einer Ist-Position des Werkstücks relativ zu der Mehrachsmaschine anhand der Markierung zumindest teilweise kamerabasiert erfolgen. Eine digitale Kamera kann demnach zum Lesen beispielsweise eines Barcodes oder QR-Codes dienen und zudem auch die Position des Werkstücks erfassen. Insbesondere in Kombination mit einem nachgeschalteten Antasten und/oder Einfädeln kann mithilfe der Kamera eine zügige erste Ausrichtung des Werkstücks erfolgen.

Nach einer weiteren Ausgestaltung des Verfahrens kann vorgesehen sein, dass werkstückspezifische Echtzeitprozessdaten und/oder werkstückspezifische Geometriedaten von einer CNC-gesteuerten Mehrachsmaschine in einer Datenbank gespeichert und zur Korrektur der Prozesskinematik einer in einem darauffolgenden Mess- und/oder Bearbeitungsschritt eingesetzten CNC-gesteuerten Mehrachsmaschine verwendet werden. So können mithilfe von in der Datenbank hinterlegten Informationen einerseits ein automatisiertes Anfahren einer speziellen Zahnlücke und andererseits eine automatisierte individuelle Anpassung der Prozessparameter für diese Zahnlücke erfolgen. Soweit beispielsweise ein aus dem Vorverzahnen und Härten resultierender Teilungsfehler der Verzahnung korrigiert werden soll, kann die Feinbearbeitung des verzahnten Werkstücks mithilfe der in der Datenbank hinterlegten Daten vollautomatisch werkstückindividuell angepasst und durchgeführt werden.

Um ein manuelles Identifizieren beispielsweise einer ersten Zahnlücke eines verzahnten Werkstücks zu ermöglichen, könnte die Markierung gegebenenfalls eine zumindest abschnittsweise pfeilartige, in Richtung einer Zahnlücke oder eines Zahns des Werkstücks weisende Form haben. Beispielsweise kann festgelegt sein, dass die Markierung in Form eines QR-Codes nach dem Vorverzahnen derart angebracht wird, dass eine Ecke eines QR-Codes in Richtung der ersten Zahnlücke der Verzahnung zeigt.

Dieser Vorteil kann alternativ oder ergänzend dadurch erreicht werden, dass die Markierung in radialer Richtung betrachtet zumindest abschnittsweise mit einer Zahnlücke oder einem Zahn des Werkstücks fluchtend angeordnet ist.

Gemäß einem zweiten Aspekt betrifft die Erfindung ein Fertigungssystem, eingerichtet zur Durchführung des erfindungsgemäßen Verfahrens, mit einer CNC-gesteuerten Mehrachsmaschine, die eine Spindel zur Aufnahme eines verzahnten Werkstücks hat, das eine maschinenlesbare, werkstückspezifische Markierung aufweist, wie einen QR-Code, einen Barcode, ein RFID-Tag oder dergleichen, die eine Vorrichtung zum automatisierten Erfassen der Markierung des Werkstücks hat, die eine Vorrichtung zum Ermitteln einer Ist-Position des Werkstücks relativ zu der Mehrachsmaschine anhand der Markierung hat, und die eine Vorrichtung zum Überführen des Werkstücks aus der Ist-Position in eine Soll-Position relativ zu der Mehrachsmaschine hat, bevor ein Bearbeitungs- und/oder Messverfahren in der Mehrachsmaschine durchgeführt werden.

Das erfindungsgemäße Fertigungssystem ist demnach dazu eingerichtet, mithilfe der werkstückspezifischen Markierung mindestens eine automatisierte Positionierung des gerüsteten Werkstücks vorzunehmen. Zusätzlich kann auch eine automatisierte Identifizierung des gerüsteten Werkstücks vorgenommen werden. Bei der CNC-gesteuerten Mehrachsmaschine kann es sich beispielsweise um eine Verzahnungsmessmaschine oder eine Feinbearbeitungsmaschine handeln.

Nach einer weiteren Ausgestaltung hat das Fertigungssystem eine weitere CNC-gesteuerten Mehrachsmaschine, die zum Bereitstellen des verzahnten Werkstücks eingerichtet ist, und eine Datenbank zum Speichern werkstückspezifischer Datensätze, wobei die CNC-gesteuerten Mehrachsmaschinen mit der Datenbank verbunden und zum Laden von werkstückspezifischen Daten aus der Datenbank sowie zum Speichern von werkstückspezifischen Daten in der Datenbank eingerichtet sind.

Bei der weiteren CNC-gesteuerten Mehrachsmaschine kann es sich um eine Maschine handeln, die einer Verzahnungsmessmaschine oder einer Feinbearbeitungsmaschine in einer Fertigungskette vorgeschaltet ist und die zum Herstellen und Speichern der geometrischen Referenzierung eingerichtet ist.

Die CNC-gesteuerte Mehrachsmaschine zum Bereitstellen des verzahnten Werkstücks kann eine Maschine zum Vorverzahnen sein, wie eine Verzahnungsfräsmaschine oder dergleichen. Diese Maschine kann als integralen Bestandteil eine Einrichtung zum Vorsehen der maschinenlesbaren, werkstückspezifischen Markierung an dem Werkstück haben, wie einen Markierungslaser oder eine Nadelprägeeinrichtung. Auch hier kann das Bestimmen des Abstands zwischen der Markierung und beispielsweise einem bestimmten Zahn oder einer bestimmten Zahnlücke der Verzahnung kamerabasiert erfolgen, um eine zügige geometrische Referenzierung zu erreichen.

Nachfolgend wird die Erfindung anhand einer Ausführungsbeispiele darstellenden Zeichnung näher beschrieben.
- Fig. 1: zeigt schematisch ein unverzahntes Werkstück mit Markierung;
- Fig. 2: zeigt schematisch das Werkstück aus Fig. 1 mit einer ersten Zahnlücke;
- Fig. 3: zeigt schematisch das verzahnte Werkstück mit Markierung;
- Fig. 4: zeigt schematisch die Markierung aus Fig. 3;
- Fig. 5: zeigt schematisch das Werkstück aus Fig. 3 in einer Ist-Position innerhalb einer Verzahnungsmessmaschine;
- Fig. 6: zeigt schematisch das Werkstück aus Fig. 3 in einer Soll-Position innerhalb der Verzahnungsmessmaschine aus Fig. 5.

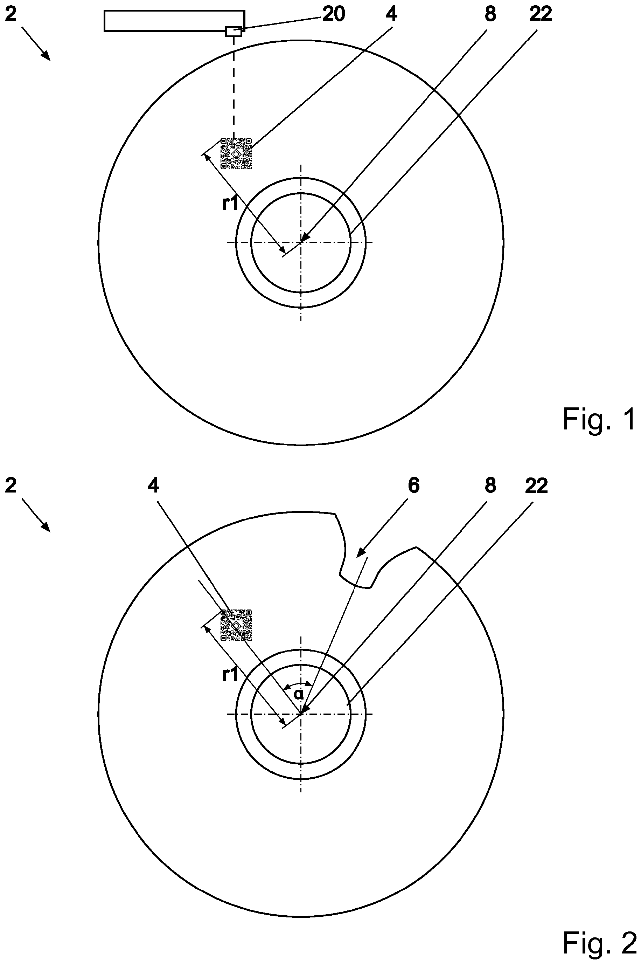

Fig. 1 und Fig. 2 zeigen exemplarisch das Bereitstellen eines Werkstücks 2.

Das Werkstück 2 wird gemäß Fig. 1 zunächst als unverzahntes Werkstück 2 ohne Markierung, also als Rohling, bereitgestellt. Das Vorsehen der maschinenlesbaren, werkstückspezifischen Markierung 4 erfolgt hier vor der Fertigung einer Referenzgeometrie. Das Werkstück 2 ist auf einer Spindel 22 einer CNC-gesteuerten Mehrachsmaschine aufgenommen, die eine Verzahnungsfräsmaschine ist. Die Markierung 4 kann aber auch vorher aufgebracht werden, während sich das Werkstück 2 z.B. auf einer Drehbank befindet.

Eine Markierungseinrichtung 20 fertigt den QR-Code 4. Bei der Markierungseinrichtung 20 handelt es sich vorliegend um einen Markierungslaser 20. Gemäß alternativer Ausführungen der Erfindung kann es sich bei der Markierungseinrichtung um eine Nadelprägevorrichtung handeln.

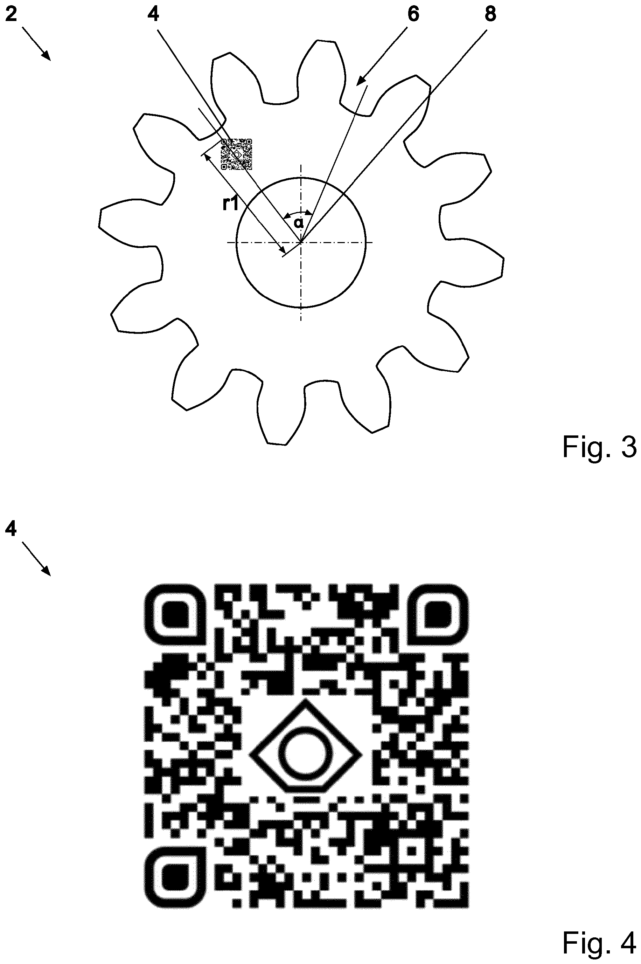

Nach dem Markieren werden die erste Zahnlücke 6 (Fig. 2) und alle weiteren Zahnlücken gefertigt, bis das Werkstück 2 vollständig verzahnt ist (Fig. 3). Zur besseren Nachvollziehbarkeit der Erfindung ist in Fig. 2 lediglich die erste Zahnlücke 6 gezeigt, wie sie zunächst einzeln in einem diskontinuierlichen Verzahnverfahren herstellbar ist, beispielsweise durch Profilfräsen mit einem Scheibenfräser. Gemäß alternativer Ausführungsbeispiele kann das Herstellen der ersten und aller weiteren Zahnlücken mithilfe kontinuierlicher Verzahnverfahren erfolgen, wie zum Beispiel durch Wälzfräsen.

Fig. 3 zeigt das verzahnte Werkstück 2, das die werkstückspezifische, maschinenlesbare Markierung 4 aufweist, die hier im Bereich einer Stirnfläche angebracht ist. Die Markierung 4 ist um den Winkel α versetzt zu der ersten Zahnlücke 6 des Werkstücks 2 angeordnet. Weiter weist die Markierung 4 einen radialen Abstand r1 zu einer Mittelachse 8 des Werkstücks 2 auf.

Die Abständige r1 und α können bereits vor dem Verzahnen in einer Datenbank hinterlegt worden sein, so dass die CNC-gesteuerte Mehrachsmaschine die erste Zahnlücke 6 anhand der Position der Markierung 4 fertigt. Alternativ oder ergänzend können die Abstände r1 und α mithilfe einer Kamera digital erfasst und in der Datenbank hinterlegt worden sein.

Der QR-Code 4 stellt eine eineindeutige Kennung zur Identifizierung des Werkstücks 2 bereit, sodass die in der Datenbank hinterlegten Abstände r1 und α in nachfolgenden Fertigungsschritten oder Messschritten von den jeweiligen CNC-gesteuerten Fertigungseinrichtungen oder Messeinrichtungen abgerufen werden können, um das Werkstück 2 automatisiert zu identifizieren und zu positionieren.

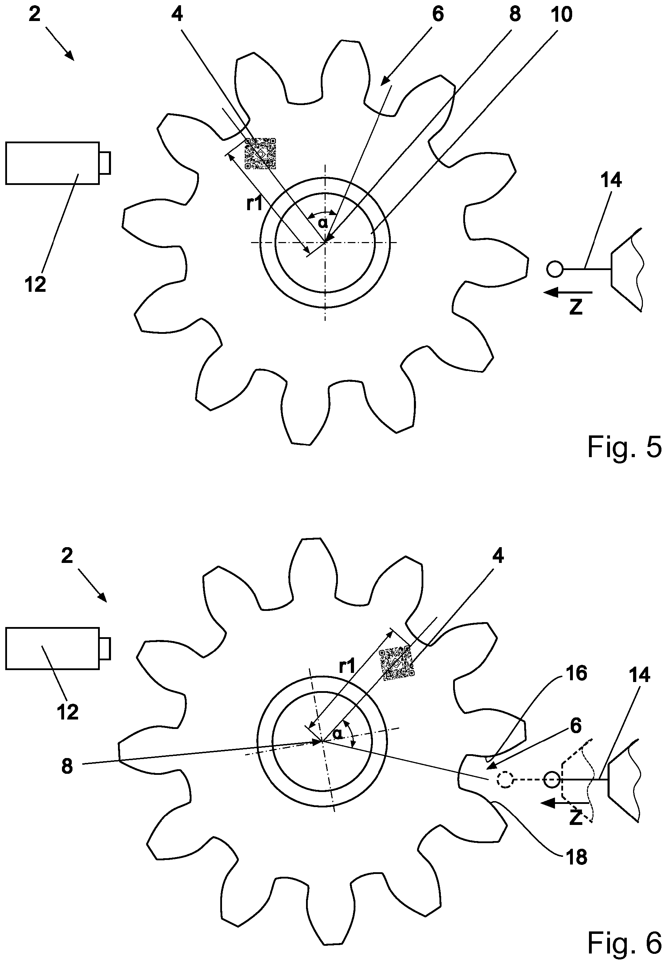

Vorliegend wird das bereitgestellte Werkstück 2, dessen geometrische Referenzierung in der Datenbank hinterlegt worden ist, nach dem Vorverzahnen und Härten auf einer Spindel 10 einer Verzahnungsmessmaschine angebracht, um das Werkstück 2 zu vermessen (Fig. 5). Nachdem das Werkstück 2 auf der Spindel 10 aufgenommen ist, erfasst eine Kamera 12 die Markierung 4, so dass das Werkstück 2 identifiziert wird und die Informationen der geometrischen Referenzierung aus der Datenbank in die Steuerung der Verzahnungsmessmaschine geladen werden.

Mithilfe der Kamera 12 wird weiter die Ist-Position des Werkstücks 2 relativ zu einem Messtaster 14 bestimmt, wobei der Messtaster 14 z.B. durch eine lineare Bewegung entlang einer Richtung Z in die Zahnlücke 6 eingefädelt werden soll.

Die Steuerung der Verzahnungsmessmaschine berechnet anhand der Daten der geometrischen Referenzierung aus der Datenbank die Soll-Position des Werkstücks 2, sodass das Werkstück 2 in dem vorliegend beschriebenen Fall durch eine Rotation um die Mittelachse 8 des Werkstücks 2 relativ zum Messtaster 14 positioniert wird (Fig. 6). Wie Fig. 6 zu entnehmen, kann der Messtaster 14 nunmehr durch eine lineare Bewegung entlang der Richtung Z in die Zahnlücke 6 eingelückt werden. Das Einlücken des Messtasters 14 ist in Fig. 6 durch die zusätzliche, gestrichelte Darstellung des Messtasters 14 in einer eingelückten Position angedeutet.

Anschließend erfolgt ein Antasten der die Zahnlücke 6 begrenzenden Zahnflanken 16, 18 durch den Messtaster 14.

Je nach Ausgestaltung und Anordnung der maschinenlesbaren Markierung 4, kann statt einer digital arbeitenden Kamera 12 auch ein Sensor (z.B. ein optischer Sensor, ein kapazitiver Sensor oder ein induktiver Sensor) eingesetzt werden, um die Markierung 4 zu lesen.

Die maschinenlesbare Markierung 4 kann z.B. einen Bereich oder Elemente umfassen, die nur in einem bestimmten Wellenlängenbereich sichtbar werden. Durch Bestrahlen der Markierung 4 mit einer geeigneten Wellenlänge, können dieser Bereich oder diese Elemente für einen Sensor sichtbar gemacht werden.

Bei mindestens einem Teil der Ausführungsformen können somit das Identifizieren des Werkstücks 2 und das Erfassen der maschinenlesbaren Markierung 4 zum Zwecke des Positionierens innerhalb einer Mehrachsmaschine getrennt durchgeführt werden.

### Bezugszeichen

- 2: Werkstück
- 4: Markierung
- 6: Zahnlücke
- 8: Mittelachse
- 10: Spindel
- 12: Kamera
- 14: Messtaster
- 16: Zahnflanke
- 18: Zahnflanke
- 20: Markierungseinrichtung
- 22: Spindel

## Patentansprüche

1. Verfahren zur automatisierten Positionierung eines verzahnten Werkstücks, mit den Verfahrensschritten:
- Bereitstellen eines verzahnten Werkstücks (2), das eine maschinenlesbare, werkstückspezifische Markierung (4) aufweist, wie einen QR-Code, einen Barcode, ein RFID-Tag oder dergleichen, wobei die werkstückspezifische Markierung (4) sowohl zur Identifizierung des Werkstücks (2) als auch zur Positionierung des Werkstücks (2) dient;
- Anbringen des verzahnten Werkstücks (4) an einer Spindel (10) einer CNC-gesteuerten Mehrachsmaschine;
- Automatisiertes Erfassen der Markierung (4) des verzahnten Werkstücks (2) zum Bestimmen der Position der Markierung (4) relativ zu der Mehrachsmaschine und zum Lesen einer codierten Information, die zur Identifizierung des Werkstücks (2) dient;
- Ermitteln einer Ist-Position des verzahnten Werkstücks (2) relativ zu der Mehrachsmaschine anhand der Markierung (4);
- Überführen des verzahnten Werkstücks (2) aus der Ist-Position in eine Soll-Position relativ zu der Mehrachsmaschine anhand der werkstückspezifischen Markierung (4) die als geometrische Referenz für den Abstand zur Sollposition dient, wobei der Abstand in einer Datenbank abgespeichert ist und ein relativ zu einer zentralen Mittelachse der Spindel und des Werkstücks gemessener radialer Abstand und/oder Winkelabstand ist, bevor ein Bearbeitungs- und/oder Messverfahren in der Mehrachsmaschine durchgeführt wird.

2. Verfahren nach Anspruch 1, **gekennzeichnet durch** das Bereitstellen des verzahnten Werkstücks, mit den Verfahrensschritten:
- Vorsehen der maschinenlesbaren, werkstückspezifischen Markierung (4) an dem Werkstück (2);
- Fertigung einer Referenzgeometrie (6, 16, 18), wie einer Zahnlücke (6), einer Zahnflanke (16, 18) oder dergleichen, durch Verzahnen des Werkstücks (2);
- Bestimmen eines Abstands (r1, α) zwischen der Markierung (4) und der Referenzgeometrie (6, 16, 18) des verzahnten Werkstücks (2); und
- Speichern des Abstands (r1, α) in einem werkstückspezifischen Datensatz einer Datenbank;
- wobei der Abstand (r1, α) bezogen auf ein Maschinenkoordinatensystem der Mehrachsmaschine vektoriell erfasst und in dem Datensatz gespeichert wird.

3. Verfahren nach Anspruch 2, **dadurch gekennzeichnet, dass**
- das Vorsehen der maschinenlesbaren, werkstückspezifischen Markierung (4) an dem Werkstück (2) vor der Fertigung der Referenzgeometrie (6, 16, 18) erfolgt.

4. Verfahren nach Anspruch 2 oder Anspruch 3, **dadurch gekennzeichnet, dass**
- die Referenzgeometrie (6, 16, 18) die erste an dem Werkstück (2) gebildete Zahnlücke (6) ist;
oder
- die Referenzgeometrie (6, 16, 18) eine Zahnflanke (16, 18) ist, die die erste an dem Werkstück (2) gebildete Zahnlücke (6) begrenzt.

5. Verfahren nach einem der Ansprüche 2 bis 4, **gekennzeichnet durch** das Bestimmen des Abstands, mit den Verfahrensschritten:
- Erfassen der Position der maschinenlesbaren, werkstückspezifischen Markierung (4) innerhalb eines Maschinenkoordinatensystems der CNC-gesteuerten Mehrachsmaschine;
- Erfassen der Position der Referenzgeometrie (6, 16, 18) innerhalb des Maschinenkoordinatensystems der CNC-gesteuerten Mehrachsmaschine; und
- Berechnung der Differenz zwischen der Position der Referenzgeometrie (6, 16, 18) und der Position der Markierung (4).

6. Verfahren nach einem der voranstehenden Ansprüche 2 bis 5,
**gekennzeichnet durch** das Ermitteln einer Ist-Position des Werkstücks (2) relativ zu der Mehrachsmaschine anhand der Markierung (4), mit den Verfahrensschritten:
- Lesen der Markierung mit einer Leseeinrichtung (12) der CNC-gesteuerten Mehrachsmaschine und Laden des werkstückspezifischen Datensatzes aus der Datenbank in die Steuerung der CNC-gesteuerten Mehrachsmaschine;
- Messen der Position der Markierung (4) innerhalb des Maschinenkoordinatensystems der CNC-gesteuerten Mehrachsmaschine mithilfe einer Messeinrichtung (12) der CNC-gesteuerten Mehrachsmaschine;
- Berechnung der Position der Referenzgeometrie (6, 16, 18) innerhalb des Maschinenkoordinatensystems der CNC-gesteuerten Mehrachsmaschine aus der gemessenen Position der Markierung (4) und dem in dem Datensatz hinterlegten Abstand (r1, α) zwischen der Markierung (4) und der Referenzgeometrie (6, 16, 18).

7. Verfahren nach einem der Ansprüche 1 bis 6, **dadurch gekennzeichnet, dass** nach dem Überführen des Werkstücks (2) aus der Ist-Position in eine Soll-Position
- ein Antasten und/oder Einfädeln eines Messtasters (14) oder eines Bearbeitungswerkzeugs erfolgen,
- wobei insbesondere ein Antasten einer die erste Zahnlücke (6) begrenzenden Zahnflanke (16, 18) und/oder ein Einfädeln eines Messtasters (14) oder eines Bearbeitungswerkzeugs in die erste Zahnlücke (6) erfolgen.

8. Verfahren nach einem der Ansprüche 1 bis 7, **dadurch gekennzeichnet, dass** das automatisierte Erfassen der Markierung (4) und/oder das Ermitteln einer Ist-Position des Werkstücks (2) relativ zu der Mehrachsmaschine anhand der Markierung (4) zumindest teilweise kamerabasiert erfolgen.

9. Verfahren nach einem der Ansprüche 1 bis 8, **dadurch gekennzeichnet, dass**
- das Bereitstellen eines verzahnten Werkstücks (2) mittels eine ersten CNC-gesteuerte Mehrachsmaschine erfolgt, die eine Maschine zum Vorverzahnen ist, wie eine Verzahnungsfräsmaschine oder dergleichen; und
- das Anbringen des Werkstücks (2) an einer Spindel (10), das automatisierte Erfassen der Markierung (4), das Ermitteln einer Ist-Position des Werkstücks (2) und das Überführen aus der Ist-Position in die Soll-Position auf einer zweiten CNC-gesteuerten Mehrachsmaschine erfolgen, die eine Verzahnungsmessmaschine oder eine Feinbearbeitungsmaschine ist.

10. Verfahren nach einem der Ansprüche 1 bis 9, **dadurch gekennzeichnet, dass**
- werkstückspezifische Echtzeitprozessdaten und/oder werkstückspezifische Geometriedaten von einer CNC-gesteuerten Mehrachsmaschine in einer Datenbank gespeichert und
- zur Korrektur der Prozesskinematik einer in einem darauffolgenden Mess- und/oder Bearbeitungsschritt eingesetzten CNC-gesteuerten Mehrachsmaschine verwendet werden.

11. Verfahren nach einem der Ansprüche 1 bis 10, **dadurch gekennzeichnet, dass**
- die Markierung (4) eine zumindest abschnittsweise pfeilartige, in Richtung einer Zahnlücke oder eines Zahns des Werkstücks weisende Form hat und/oder
- die Markierung (4) in radialer Richtung betrachtet zumindest abschnittsweise mit einer Zahnlücke oder einem Zahn des Werkstücks fluchtend angeordnet ist.

12. Fertigungssystem, eingerichtet zur Durchführung des Verfahrens nach einem der Ansprüche 1 bis 11,
- mit einer CNC-gesteuerten Mehrachsmaschine
- die eine Spindel (10) zur Aufnahme eines verzahnten Werkstücks (2) hat, das eine maschinenlesbare, werkstückspezifische Markierung (4) aufweist, wie einen QR-Code, einen Barcode, ein RFID-Tag oder dergleichen,
- die eine Vorrichtung (12) zum automatisierten Erfassen der Markierung (4) des Werkstücks (2) hat,
- die eine Vorrichtung (12) zum Ermitteln einer Ist-Position des Werkstücks (2) relativ zu der Mehrachsmaschine anhand der Markierung (4) hat, und
- die eine Vorrichtung zum Überführen des Werkstücks (2) aus der Ist-Position in eine Soll-Position relativ zu der Mehrachsmaschine hat, bevor ein Bearbeitungs- und/oder Messverfahren in der Mehrachsmaschine durchgeführt wird.

13. Fertigungssystem nach Anspruch 12,
- wobei die CNC-gesteuerte Mehrachsmaschine eine Verzahnungsmessmaschine oder eine Feinbearbeitungsmaschine ist.

14. Fertigungssystem nach Anspruch 12 oder Anspruch 13,
- mit einer weiteren CNC-gesteuerten Mehrachsmaschine, die zum Bereitstellen des verzahnten Werkstücks (2) eingerichtet ist, und
- mit einer Datenbank zum Speichern werkstückspezifischer Datensätze,
- wobei die CNC-gesteuerten Mehrachsmaschinen mit der Datenbank verbunden und zum Laden von werkstückspezifischen Daten aus der Datenbank sowie zum Speichern von werkstückspezifischen Daten in der Datenbank eingerichtet sind.

15. Fertigungssystem nach Anspruch 14,
- wobei die weitere CNC-gesteuerte Mehrachsmaschine zum Bereitstellen des verzahnten Werkstücks (2) eine Maschine zum Vorverzahnen ist, wie eine Verzahnungsfräsmaschine oder dergleichen.

## Claims

1. A method for the automated positioning of a toothed workpiece, having the following method steps:
- providing a toothed workpiece (2), which has a machine-readable, workpiece-specific marking (4), such as a QR code, a barcode, an RFID tag, or the like, wherein the workpiece-specific marking (4) is provided for identifying and positioning of the workpiece (2);
- attaching the toothed workpiece (4) on a spindle (10) of a CNC-controlled multiaxis machine;
- automatically acquiring the marking (4) of the toothed workpiece (2) for determining the position of the marking (4) with respect to the multiaxis machine and for acquiring encoded information for identifying the workpiece (3);
- ascertaining an actual position of the toothed workpiece (2) in relation to the multiaxis machine on the basis of the marking (4);
- transferring the toothed workpiece (2) from the actual position into a setpoint position in relation to the multiaxis machine based on the workpiece-specific marking (4) which serves as a geometrical reference for the distance to the setpoint position, wherein the distance is stored in a database und wherein the distance is measured in relation to a central axis of the spindle and/oder an angular distance, before a machining and/or measuring method is carried out in the multiaxis machine.

2. The method according to claim 1, **characterized by** the provision of the toothed workpiece, having the following method steps:
- providing the machine-readable, workpiece-specific marking (4) on the workpiece (2);
- manufacturing a reference geometry (6, 16, 18), such as a tooth gap (6), a tooth flank (16, 18), or the like by gear cutting of the workpiece (2);
- determining a distance (r1, α) between the marking (4) and the reference geometry (6, 16, 18) of the toothed workpiece (2); and
- storing the distance (r1, α) in a workpiece-specific data set of a database;
- wherein the distance (r1, α) is vectorially acquired in relation to a machine coordinate system of the multiaxis machine and stored in the database.

3. The method according to claim 2, **characterized in that**
- the provision of the machine-readable, workpiece-specific marking (4) on the workpiece (2) is performed before the manufacturing of the reference geometry (6, 16, 18).

4. The method according to claim 2 or claim 3, **characterized in that**
- the reference geometry (6, 16, 18) is the first tooth gap (6) formed on the workpiece (2);
or
- the reference geometry (6, 16, 18) is a tooth flank (16, 18), which delimits the first tooth gap (6) formed on the workpiece (2).

5. The method according to any one of claims 2 to 4, **characterized by** the determination of the distance, having the following method steps:
- acquiring the position of the machine-readable, workpiece-specific marking (4) within a machine coordinate system of the CNC-controlled multiaxis machine;
- acquiring the position of the reference geometry (6, 16, 18) within the machine coordinate system of the CNC-controlled multiaxis machine; and
- computing the difference between the position of the reference geometry (6, 16, 18) and the position of the marking (4).

6. The method according to any one of preceding claims 2 to 5, **characterized by** the ascertainment of an actual position of the workpiece (2) in relation to the multiaxis machine on the basis of the marking (4), having the following method steps:
- reading the marking using a read unit (12) of the CNC-controlled multiaxis machine and loading the workpiece-specific data set from the database into the controller of the CNC-controlled multiaxis machine;
- measuring the position of the marking (4) within the machine coordinate system of the CNC-controlled multiaxis machine with the aid of the measuring unit (12) of the CNC-controlled multiaxis machine;
- computing the position of the reference geometry (6, 16, 18) within the machine coordinate system of the CNC-controlled multiaxis machine from the measured position of the marking (4) and the distance (r1, a) stored in the data set between the marking (4) and the reference geometry (6, 16, 18).

7. The method according to any one of claims 1 to 6, **characterized in that** after the transfer of the workpiece (2) from the actual position into a setpoint position
- scanning and/or threading of a measuring feeler (14) or a machining tool are performed,
- wherein in particular scanning of a tooth flank (16, 18) delimiting the first tooth gap (6) and/or threading of a measuring feeler (14) or a machining tool into the first tooth gap (6) are performed.

8. The method according to any one of claims 1 to 7, **characterized in that** the automated acquisition of the marking (4) and/or the ascertainment of an actual position of the workpiece (2) in relation to the multiaxis machine on the basis of the marking (4) are performed at least partially in a camera-based manner.

9. The method according to any one of claims 1 to 8, **characterized in that**
- the provision of a toothed workpiece (2) is performed by means of a first CNC-controlled multiaxis machine, which is a machine for preliminary gear cutting, such as a gear cutting milling machine or the like; and
- the attaching of the workpiece (2) on a spindle (10), the automated acquisition of the marking (4), the ascertainment of an actual position of the workpiece (2), and the transfer from the actual position into the setpoint position are performed on a second CNC-controlled multiaxis machine, which is a gear cutting measuring machine or a finishing machine.

10. The method according to any one of claims 1 to 9, **characterized in that**
- workpiece-specific real-time process data and/or workpiece-specific geometry data are stored by a CNC-controlled multiaxis machine in a database and
- are used for the correction of the process kinematics of a CNC-controlled multiaxis machine used in a following measuring and/or machining step.

11. The method according to any one of claims 1 to 10, **characterized in that**
- the marking (4) has shape which is arrow-like at least in sections pointing in the direction of a tooth gap or a tooth of the workpiece
and/or
- the marking (4), viewed in the radial direction, is arranged at least partially aligned with a tooth gap or a tooth of the workpiece.

12. A manufacturing system, configured for carrying out the method according to any one of claims 1 to 11,
- having a CNC-controlled multiaxis machine
- which has a spindle (10) for accommodating a toothed workpiece (2), which has a machine-readable, workpiece-specific marking (4), such as a QR code, a barcode, an RFID tag, or the like,
- which has a device (12) for automatically acquiring the marking (4) of the workpiece (2),
- which has a device (12) for ascertaining an actual position of the workpiece (2) in relation to the multiaxis machine on the basis of the marking (4), and
- which has a device for transferring the workpiece (2) from the actual position into a setpoint position in relation to the multiaxis machine, before a machining and/or measuring method is carried out in the multiaxis machine.

13. The manufacturing system according to claim 12,
- wherein the CNC-controlled multiaxis machine is a gear cutting measuring machine or a finishing machine.

14. The manufacturing system according to claim 12 or claim 13,
- having a further CNC-controlled multiaxis machine, which is configured to provide the toothed workpiece (2), and
- having a database for storing workpiece-specific data sets,
- wherein the CNC-controlled multiaxis machines are connected to the database and are configured to load workpiece-specific data from the database and to store workpiece-specific data in the database.

15. The manufacturing system according to claim 14,
- wherein the further CNC-controlled multiaxis machine for providing the toothed workpiece (2) is a machine for preliminary gear cutting, such as a gear cutting milling machine or the like. A method for automated positioning of a toothed workpiece, having the following method steps:
- providing a toothed workpiece (2), which has a machine-readable, workpiece-specific marking (4), such as a QR code, a barcode, an RFID tag, or the like;
- attaching the toothed workpiece (4) on a spindle (10) of a CNC-controlled multiaxis machine;
- automatically acquiring the marking (4) of the workpiece (2);
- ascertaining an actual position of the workpiece (2) in relation to the multiaxis machine on the basis of the marking (4);
- transferring the workpiece (2) from the actual position into a setpoint position in relation to the multiaxis machine, before a machining and/or measuring method is carried out in the multiaxis machine.

## Revendications

1. Procédé de positionnement automatisé d'une pièce à usiner dentée, comprenant les étapes suivantes :
- fournir une pièce à usiner dentée (2) qui présente un marquage (4) spécifique à la pièce à usiner et lisible par machine, comme un QR-code, un code-barres, une balise RFID ou analogue, le marquage spécifique à la pièce à usiner (4) servant aussi bien à identifier la pièce à usiner (2) qu'à positionner la pièce à usiner (2) ;
- amener la pièce à usiner dentée (2) sur une broche (10) d'une machine multi-axes à commande CNC ;
- détecter de façon automatisée le marquage (4) de la pièce à usiner dentée (2) pour déterminer la position du marquage (4) par rapport à la machine multi-axes et pour lire une information codée permettant d'identifier la pièce à usiner (2) ;
- déterminer la position réelle de la pièce à usiner dentée (2) par rapport à la machine multi-axes à l'aide du marquage (4) ;
- passer la pièce à usiner dentée (2) depuis la position réelle à une position théorique par rapport à la machine multi-axes en utilisant le marquage spécifique à la pièce à usiner (4) comme référence géométrique pour la distance jusqu'à la position théorique, la distance étant enregistrée dans une base de données et étant une distance radiale et/ou une distance angulaire mesurée par rapport à un axe médian central de la broche et de la pièce à usiner, avant de réaliser un procédé d'usinage et/ou de mesure dans la machine multi-axes.

2. Procédé selon la revendication 1, **caractérisé par** la fourniture de la pièce à usiner dentée, comprenant les étapes suivantes :
- prévoir le marquage (4) spécifique à la pièce à usiner et lisible par machine sur la pièce à usiner (2) ;
- réaliser une géométrie de référence (6, 16, 18), comme un entredent (6), un flanc de dent (16, 18) ou analogue, en taillant la pièce à usiner (2) ;
- définir une distance (r1, α) entre le marquage (4) et la géométrie de référence (6, 16, 18) de la pièce à usiner dentée (2) ; et
- enregistrer la distance (r1, α) dans un ensemble de données spécifique à la pièce à usiner d'une base de données ;
- la distance (r1, α) étant déterminée sous forme vectorielle rapportée à un système de coordonnées de la machine multi-axes et sauvegardée dans l' ensemble de données.

3. Procédé selon la revendication 2, **caractérisé en ce que**
- l'apport du marquage (4) spécifique à la pièce à usiner (2) et lisible par machine intervient avant la réalisation de la géométrie de référence (6, 16, 18).

4. Procédé selon la revendication 2 ou 3, **caractérisé en ce que**
- la géométrie de référence (6, 16, 18) est le premier entredent (6) formé sur la pièce à usiner (2) ;
ou
- la géométrie de référence (6, 16 18) est un flanc de dent (16, 18) qui délimite le premier entredent (6) formé sur la pièce à usiner (2).

5. Procédé selon l'une des revendications 2 à 4, **caractérisé par** la détermination de la distance, comprenant les étapes suivantes :
- détecter la position du marquage (4) spécifique à la pièce à usiner et lisible par machine au sein d'un système de coordonnées de la machine multi-axes à commande CNC ;
- détecter la position de la géométrie de référence (6, 16, 18) au sein du système de coordonnées de la machine multi-axes à commande CNC ; et
- calculer la différence entre la position de la géométrie de référence (6, 16, 18) et la position du marquage (4).

6. Procédé selon l'une des revendications 2 à 5, **caractérisé par** la détermination d'une position réelle de la pièce à usiner (2) par rapport à la machine multi-axes à l'aide du marquage (4), comprenant les étapes suivantes :
- lire le marquage avec un dispositif de lecture (12) de la machine multi-axes à commande CNC et charger l'ensemble de données spécifique à la pièce à usiner depuis la base de données dans la commande de la machine multi-axes à commande CNC ;
- mesurer la position du marquage (4) au sein du système de coordonnées de la machine multi-axes à commande CNC à l'aide d'un dispositif de mesure (12) de la machine multi-axes à commande CNC ;
- calculer la position de la géométrie de référence (6, 16, 18) au sein du système de coordonnées de la machine multi-axes à commande CNC à partir de la position mesurée du marquage (4) et de la distance (r1, α) stockée dans l'ensemble de données entre le marquage (4) et la géométrie de référence (6, 16, 18).

7. Procédé selon l'une des revendications 1 à 6, **caractérisé en ce que**, après le passage de la pièce à usiner (2) de la position réelle à une position théorique
- on vient toucher et/ou enfiler un capteur de mesure (14) ou un outil d'usinage,
- on vient en particulier toucher un flanc de dent (16, 18) délimitant le premier entredent (6) et/ou enfiler un capteur de mesure (14) ou un outil d'usinage dans le premier entredent (6).

8. Procédé selon l'une des revendications 1 à 7, **caractérisé en ce que** la détection automatisée du marquage (4) et/ou la détermination d'une position réelle de la pièce à usiner (2) par rapport à la machine multi-axes se font à l'aide du marquage (4) au moins en partie de façon assistée par une caméra.

9. Procédé selon l'une des revendications 1 à 8, **caractérisé en ce que**
- la fourniture d'une pièce à usiner dentée (2) se fait à l'aide d'une première machine multi-axes à commande CNC, laquelle est une machine pour prétailler des engrenages, telle qu'une machine de fraisage d'engrenages ou analogue ; et
- l'installation de la pièce à usiner (2) sur une broche (10), la détection automatisée du marquage (4), la détermination de la position réelle de la pièce à usiner (2) et le passage depuis la position réelle à la position théorique se font sur une deuxième machine multi-axes à commande CNC, laquelle est une machine de mesure d'engrenages ou une machine de finissage.

10. Procédé selon l'une des revendications 1 à 9, **caractérisé en ce que**
- des données de processus en temps réel spécifiques à la pièce à usiner et/ou des données de géométrie spécifiques à la pièce à usiner sont enregistrées par une machine multi-axes à commande CNC dans une base de données et
- sont utilisées pour corriger la cinématique du processus d'une machine multi-axes à commande CNC utilisée dans une étape de mesure et/ou d'usinage ultérieure.

11. Procédé selon l'une des revendications 1 à 10, **caractérisé en ce que**
- le marquage (4) a une forme au moins par endroits en forme de flèche, dans la direction d'un entredent ou d'une dent de la pièce à usiner, et/ou
- le marquage (4) est agencé aligné au moins par endroits, vu dans le sens radial, avec un entredent ou une dent de la pièce à usiner.

12. Système de fabrication, pour la réalisation du procédé selon l'une des revendications 1 à 11,
- comprenant une machine multi-axes à commande CNC
• qui a une broche (10) pour recevoir une pièce à usiner dentée (2), laquelle pièce présente un marquage (4) spécifique à la pièce à usiner et lisible par machine, comme un QR-code, un code-barres, une balise RFID ou analogue,
• qui a un dispositif (12) pour détecter de façon automatisée le marquage (4) de la pièce à usiner (2),
• qui a un dispositif (12) pour déterminer la position réelle de la pièce à usiner (2) par rapport à la machine multi-axes à l'aide du marquage (4), et
• qui a un dispositif pour faire passer la pièce à usiner (2) depuis la position réelle à une position théorique par rapport à la machine multi-axes, avant de réaliser un processus d'usinage et/ou de mesure dans la machine multi-axes.

13. Système de fabrication selon la revendication 12,
- dans lequel la machine multi-axes à commande CNC est une machine de mesure d'engrenages ou une machine de finissage.

14. Système de fabrication selon la revendication 12 ou 13,
- comprenant une autre machine multi-axes à commande CNC qui est conçue pour fournir la pièce à usiner dentée (2), et
- avec une base de données pour enregistrer des ensembles de données spécifiques à la pièce à usiner,
- les machines multi-axes à commande CNC étant raccordées à la base de données et étant configurées pour charger des données spécifiques à la pièce à usiner depuis la base de données et pour enregistrer des données spécifiques à la pièce à usiner dans la base de données.

15. Système de fabrication selon la revendication 14,
- dans lequel l'autre machine multi-axes à commande CNC destinée à fournir la pièce à usiner dentée (2) est une machine pour prétailler les engrenages, comme une machine de fraisage d'engrenages ou analogue.
